# EUROPEAN PATENT APPLICATION

(11) **EP 4 787 777 A1**
(43) Date of publication of application: **05.08.2026**
(21) Application number: 26154441.5
(22) Date of filing: 27.01.2026
(51) Int. Cl.: H04L 9/40, H04L 41/16, H04W 24/08

(54) **DYNAMIC SECURITY NETWORK SLICING IN CELLULAR NETWORKS**

(30) Priority: 31.01.2025 US 202563752226 P; 30.04.2025 US 202519195142
(71) Applicant: CA, Inc., Palo Alto, CA 94304 (US)
(72) Inventor: Pepe, Michael, Smithtown, 11787 (US); Vijayvargiya, Rajat, West Chester, 19382 (US); Sudarsan, Padmavathi, Naperville, 60565 (US); Bhamidimarri, Arun, Lewisville, 75056 (US)
(74) Representative: Dilg, Haeusler, Schindelmann Patentanwaltsgesellschaft mbH

(57) **Abstract**

An example apparatus for monitoring a cellular network includes a machine learning (ML) engine configured to output a trigger in response to processing first telemetry data from the cellular network, the first telemetry data generated in response to traffic of a session, managed by the cellular network, between a device and a network; and a broker configured to receive the first telemetry data from the cellular network, provide the first telemetry data to the ML engine, receive the trigger from the ML engine, and control a packet core of the cellular network, in response to the trigger, to move the session from a first network slice of the cellular network to a second network slice of the cellular network.

## Description

### BACKGROUND

In a 5G network, user equipment (UE) devices can communicate with a radio access network (RAN). The RAN can communicate with a packet core through a network. The packet core can implement a set of functions configured to process communications by UE systems. A packet core can be a "central brain" that can manage subscriber sessions, enforce policies, route data between UE systems and external networks (e.g., the Internet), and the like.

UE systems can share resources of a cellular network. For example, in a 5G network, UE systems can share functions of the packet core. Some UE systems can exhibit anomalous behavior, such as unusual traffic volume, protocol violations, and the like. Anomalous behavior can be evidence of a security threat, such as the initiation of a denial-of-service attack, while another anomalous behavior may be benign. UE systems that exhibit anomalous behavior can consume resources of the cellular network in a manner that can affect other UE systems that may be operating normally. The operator of the cellular network may desire to monitor anomalous behavior of UE systems to detect and mitigate security threats.

### SUMMARY

In some embodiments, an apparatus for monitoring a cellular network can include a machine learning (ML) engine configured to output a trigger in response to processing first telemetry data from the cellular network. The first telemetry data can be generated in response to traffic of a session, managed by the cellular network, between a device and a network. The apparatus can include a broker configured to receive the first telemetry data from the cellular network, provide the first telemetry data to the ML engine, receive the trigger from the ML engine, and control a packet core of the cellular network, in response to the trigger, to move the session from a first network slice of the cellular network to a second network slice of the cellular network.

In some embodiments, a cellular network can include a radio access network (RAN), a first network, and packet core coupled to the RAN by the first network. At least one of the RAN, the first network, and the packet core can be configured to generate first telemetry data in response to traffic of a session between a device and a second network. The cellular network can include a network monitor configured to receive the first telemetry data and control a packet core of the cellular network, in response to processing the telemetry data, to move the session from a first network slice of the cellular network to a second network slice of the cellular network.

In some embodiments, a method of monitoring a cellular network can include receiving, at a network monitor, first telemetry data from the cellular network. The first telemetry data can be generated in response to traffic of a session, managed by the cellular network, between a device and a network. The method can include processing, at the network monitor, the first telemetry data to generate a trigger. The method can include controlling, by the network monitor a packet core of the cellular network in response to the trigger, to move the session from a first network slice of the cellular network to a second network slice of the cellular network.

### BRIEF DESCRIPTION OF THE DRAWINGS

Fig. 1 is a block diagram depicting a telecommunication system according to some embodiments.
Fig. 2 is a block diagram depicting a data center according to embodiments.
Fig. 3 is a block diagram depicting a logical view of a cellular network according to some embodiments.
Fig. 4 is a block diagram depicting a security network slice according to some embodiments.
Fig. 5 is a block diagram depicting network monitor 112 according to some embodiments.
Fig. 6 is a flow diagram depicting a method of managing a UE system in a cellular network according to some embodiments.
Fig. 7 is a flow diagram depicting a method of switching network slices for a PDU session in response to a trigger according to some embodiments.

### DETAILED DESCRIPTION

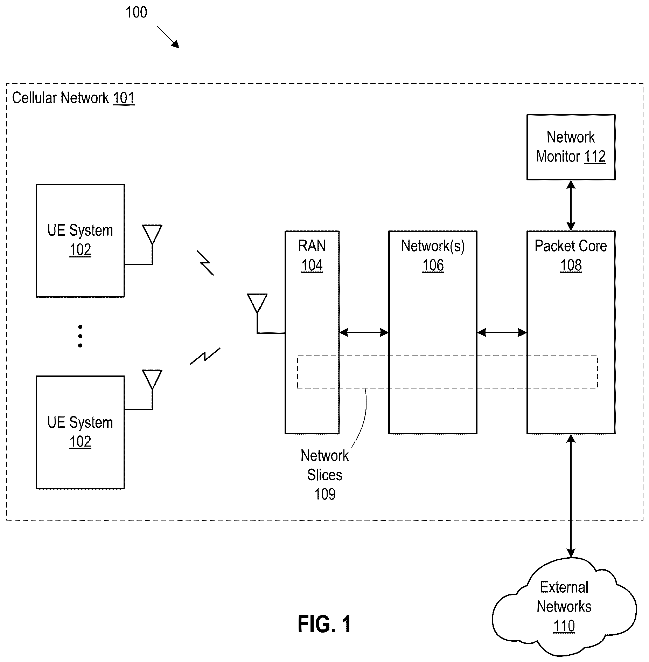

Fig. 1 is a block diagram depicting a telecommunication system 100 according to some embodiments. A system may be a machine or arrangement of machines or both (a machine can be described in terms of an arrangement of its parts, which can be other machines). The terms device, machine, and apparatus may be used interchangeably herein. A telecommunication system may be a system designed to exchange information amount users. Telecommunication system 100 can include a cellular network 101 in communication with external networks 110. A network may be a combination of devices and their connecting links. A cellular network may be a network where the links to and from some devices are wireless and the network can be distributed over areas known as cells serviced by fixed-location transceivers (sometimes referred to as base stations). A 5G network may be a cellular network that includes fifth generation technology, such as that defined by the International Telecommunication Union (ITU) under the IMT-2020 standard. An external network may be a network external to another system (e.g., external to cellular network 101). The public Internet is a well-known and widely used example of an external network 110.

Cellular network 101 can include UE systems 102, RAN 104, network(s) 106, packet core 108, and network monitor 112. A UE system of a cellular network may be a system configured to communicate wirelessly. UE systems 102 can be any of a myriad of wireless devices, such as mobile telephones, smart watches, Internet-of-Things (IoT) devices, or the like. In some embodiments, a UE system 102 can be a computer. A computer may be a system configured to store and process data by execution of instructions of a program. Software may be a program or programs executed by a computer. Hardware may be a device or devices of a computer.

A RAN may be a system of a cellular network that provides wireless communications to, and receives wireless communications from, UE systems. A RAN can include base stations distributed over a geographic area. Each base station can include an antenna, a radio frequency (RF) front end, a radio unit (RU), a distributed unit (DU), a central unit (CU), and the like known in the art. A packet core may be a system of a cellular network configured to process communications by UE systems using a set of network functions. Packet core 108 can include computers (e.g., hardware and software), such as computers in a data center, cloud, or the like.

UE systems 102 can communicate wirelessly with RAN 104. RAN can handle radio signal transmission, reception, and related processing tasks, such as scheduling, handovers, and resource management. RAN 104 can be responsible for linking UE systems 102 to packet core 108 (e.g., carrying data and signaling messages between UE systems 102 and packet core 108). RAN 104 can be responsible for radio resource management, such as allocation of frequency, power, and time-slot resources dynamically to deliver reliable connectivity and desired quality of service (QoS). RAN 104 can be responsible for managing handovers between base stations for UE systems 102. RAN 104 can be disaggregated into different units (e.g., CUs, DUs, Rus, etc.). An RU may be a device that transmits/receives signals over the air. A DU may be a system that can handle data transmission between RUs and CUs. DUs can be located at or near base stations of the RAN. A CU may be a system that can handle data transmission between RAN 104 and packet core 108 over network(s) 106.

Network(s) 106 can exchange data between RAN 104 and packet core 108. The exchanged data can be traffic in cellular network 101. Traffic may be network packets transmitted over time. A network packet ("packet") may be a unit of data transmitted in a network using one or more protocols. For example, packets can be transmitted by the devices on the network using the layered protocols of the Open Systems Interconnection (OSI) model, which is well known in the art. A packet can include a header and a payload. A payload of a packet may be arbitrary data. A header of a packet may be control data, e.g., control data for protocol(s). A header can include a stack or multiple layers of headers. Internet Protocol (IP) is a well-known and widely used layer 3 protocol. Thus, network(s) 106 can be IP network(s).

Packet core 108 can implement network functions (NFs). An NF may be a function in a cellular network. NFs in packet core 108 can include, for example, access and mobility management function (AMF), session management function (SMF), user plane function (UPF), unified data management (UDM), authentication server function (AUSF), policy control function (PCF), network repository function (NRF), network exposure function (NEF), and the like. An AMF may manage UE system registration, connection, and mobility states and can maintain signaling context for UE systems. An SMF can create, modify, and terminate user data sessions (e.g., protocol data unit (PDU) sessions), allocate IP addresses, and configure user-plane connections. A UPF can forward and route user data to external networks 110. A UDM can store and manage subscriber data and authentication credentials. An AUSF can authenticate UE systems alongside a UDM to grant network access. A PCF can enforce network policies, QoS rules, etc. An NRF can function as a service registry for discovering and communicating with other NFs. An NEF can provide application programming interfaces (APIs) for applications to interact with other NFs of packet core 108. NFs of packet core 108 can be implemented by software executing on hardware. For example, NFs can be implemented as software executing in data center(s) (e.g., cloud(s)). To communicate with an external network 110, data from a UE system 102 can be processed by a set of NFs of packet core 108.

In some embodiments, cellular network 101 can implement network slicing. Network slicing may be a division of resources of the cellular network into logical networks that coexist on the same physical infrastructure. A network slice 109 may be a set of resources of cellular network 101. A network slice 109 can span through RAN 104, through network(s) 106, and through packet core 108. For example, a network slice 109 can include a set of NFs of packet core 108. Different network slices 109 can have different NFs and/or different instances of the same NFs.

A network monitor may be a system configured to monitor traffic in a network. Network monitor 112 can monitor traffic in cellular network 101, e.g., traffic to and from UE systems 102 that passes through RAN 104, network(s) 106, and NFs of packet core 108. Network monitor 112 can interact with packet core 108 through APIs (e.g., APIs provided by a NEF). An API may be a set of rules or protocols that enable software applications to communicate. Network monitor 112 can request operations to be performed by packet core 108. Network monitor 112 can receive data from packet core 108 (e.g., telemetry data generated by NFs). Telemetry data may be data generated for telemetry. Telemetry may be the process of collecting and analyzing data to determine behavior of a system, e.g., performance of a system. In some embodiments, network monitor 112 can receive telemetry data from RAN 104 or networks 106 or any combination of RAN 104, networks 106, and packet core 108.

UE systems 102 can communicate with packet core 108 (e.g., an AMF network function) to request and create PDU sessions. A PDU session may be a communication path through cellular network 101 between a UE system and an external network. A PDU session can be associated with a session identifier (PDU session ID), a Single Network Slice Selection Assistance Information (S-NSSAI), a data network name (DNN), a PDU session type, and the like known in the art. A PDU session ID may be an identifier that uniquely identifies the session in the UE system and the packet core. S-NSSAI may be an identifier of a network slice to which the session belongs. A DNN may be an identifier of the target network (e.g., one of external networks 110).

Network monitor 112 can operate as an external, customer-deployable security inspection platform situated outside packet core 108. Network monitor 112 can continuously monitor all traffic sessions originating from, or destined to, UE systems 102. One function of network monitor 112 can be to detect anomalous behavior and security threats in real time using a combination of rule-based heuristics and machine learning (ML) techniques. Network monitor 112 can provide extensible monitoring capabilities tailored to customer IT requirements while preserving sovereignty over policy management and event response.

Unlike other types of inline enforcement tools within a packet core, network monitor 112 can enable deployment and configuration of third-party or proprietary monitoring systems at their discretion. These systems can be positioned at ingress/egress points of the cellular network (e.g., gNodeB (gNB) points, user plane function (UPF) points, etc.) and can be responsible for analyzing traffic attributes, such as: (1) UE Identifiers: Internation Mobile Subscriber Identity (IMSI), Globally Unique Temporary Identifier (GUTI), and the like; (2) Traffic Metrics: Packet counts, byte rates, session durations, entropy levels, and the like; (3) Application Awareness: Inspection of payloads to infer application-level signatures; and (4) Behavioral Indicators: Detection of traffic bursts, port scanning, potential command-and-control (C2) traffic.

Cellular networks, such as 5G networks, can offer unprecedented opportunities for dynamic resource allocation. However, security can remain a significant concern, particularly for UE systems exhibiting anomalous behavior. Some solutions can rely heavily on constant monitoring and scrutiny, which can lead to inefficient use of resources and a lack of scalability. Various embodiments described herein propose a more elastic approach, which can include dynamically moving UE systems to security network slices only when necessary, guided by real-time outcomes, based on application triggers. Some embodiments include techniques for dynamically relocating a UE system into a security network slice based on application-level transactional triggers. The triggers can be implemented using artificial intelligence (AI) or other machine learning (ML) techniques. The solution can ensure elastic, on-demand security measures for cellular networks, such as 5G networks, offering significant advantages over constant scrutiny mechanisms by optimizing resource utilization and enhancing real-time threat detection. The system can leverage AI/ML to identify bad actors or potential security threats and assigns UE systems to appropriate security network slices with varying levels of protection. These security network slices may include enhanced tools such as packet sniffing for forensic analysis and active threat mitigation.

Some embodiments can enable dynamic UE relocation. Using application-level transactional triggers, a UE system can be dynamically reassigned to a security network slice when anomalous behavior is detected. Some embodiments can include AI/ML-driven threat analysis, which can be implemented by network monitor 112. The AI/ML models can analyze real-time telemetry data and can identify bad actors exhibiting anomalous behaviors, such as distributed denial of service (DDoS) attacks or unauthorized access attempts. Some embodiments can include enhanced security slicing. Each security network slice can be configured with tailored capabilities (e.g., packet sniffing tools, anomaly detection systems, etc.) to provide varying levels of protection. Some embodiments include on-demand security activation. Unlike constant scrutiny models, the techniques described herein can activate security measures only when needed, reducing overhead and improving resource elasticity. The described techniques can offer service providers different monetization opportunities, including pay-as-you-go models that bill subscribers for security measures based on actual usage, rather than static provisions.

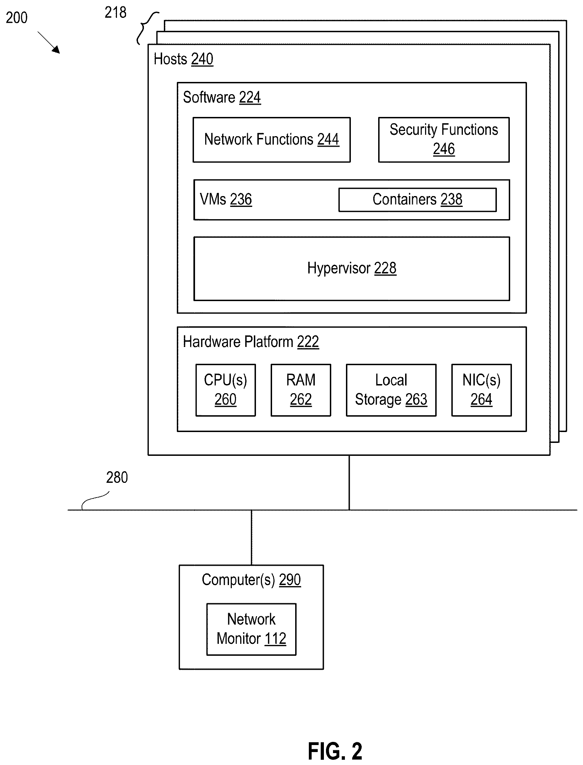

Fig. 2 is a block diagram depicting a data center 200 according to embodiments. One or more data centers 200 or variants thereof can implement parts of cellular network 101 in Fig. 1. Data center 200 includes a cluster of computers referred to as hosts 240 ("host cluster 218"). A host may be a computer. Host 240 can be a physical computer having a hardware platform such as an x86 platform or an ARM platform. For purposes of clarity, only one host cluster 218 is shown. However, data center 200 can include many of such host clusters 218. In the example shown, a hardware platform 222 of each host 240 includes conventional components of a computing device, such as one or more central processing units (CPUs) 260, system memory (e.g., random access memory (RAM) 262), one or more network interface controllers (NICs) 264, and optionally local storage 263. CPUs 260 are configured to execute instructions, for example, executable instructions that perform one or more operations described herein, which may be stored in RAM 262. NICs 264 enable host 240 to communicate with other devices through a physical network 280. Physical network 280 enables communication between hosts 240 and between other components and hosts 240.

In some embodiments, hosts 240 can access shared storage by using NICs 264 to connect to network 280. In other embodiments, each host 240 can include a host bus adapter (HBA) through which input/output operations (IOs) are sent to shared storage 270 over a separate network (e.g., a fibre channel (FC) network). Shared storage can include one or more storage arrays, such as a storage area network (SAN), network attached storage (NAS), or the like. Shared storage may comprise magnetic disks, solid-state disks, flash memory, and the like as well as combinations thereof. In some embodiments, hosts 240 include local storage 263 (e.g., hard disk drives, solid-state drives, etc.). Local storage 263 in each host 240 can be aggregated and provisioned as part of a virtual SAN, which is another form of shared storage.

Software 224 of each host 240 provides a virtualization layer, referred to herein as a hypervisor 228, which directly executes on hardware platform 222. In an embodiment, there is no intervening software, such as a host operating system (OS), between hypervisor 228 and hardware platform 222. Thus, hypervisor 228 is a Type-1 hypervisor (also known as a "bare-metal" hypervisor). As a result, the virtualization layer in host cluster 218 (collectively hypervisors 228) can be a bare-metal virtualization layer executing directly on host hardware platforms. Hypervisor 228 abstracts processor, memory, storage, and network resources of hardware platform 222 to provide a virtual machine execution space within which multiple VMs 236 may be concurrently instantiated and executed. Software executes in VMs 236 either directly on guest operating systems of VMs 236 or using containers 238. Containers 238 implement operating system-level virtualization, where an abstraction layer is provided on top of a guest operating system of a VM 236. While the embodiment shows containers executing in VMs 236, some hypervisors support the execution of containers outside of a virtual machine environment. In another embodiment, a host in data center 200 can include a host operating system executing directly on its hardware platform without virtualization (e.g., without hypervisor 228). In such case, containers can execute on the host operating system outside of a virtual machine context.

Software executing in VMs 236 (within containers or directly on guest operating systems) may include NFs 244. Various NFs that can be used in cellular network 101 are described above. In addition, the software can include security functions 246. A security function may be a software function that implements security (e.g., packet sniffing, access control, firewalls, intrusion prevision systems, or any of a myriad of network security functions). In some embodiments, a security function 246 can be packet inspection of the traffic. Packet inspection may be analyzing packet header data, packet payload data, or both. In some embodiments, a security function 246 can be policy-based controls of the traffic. Policy-based controls may be a firewall or the like configured to control the flow of traffic in response to defined policies.

Hosts 240 can communicate with computer(s) 290 over network 280. Computer(s) 290 can be configured the same as or similar to host(s) 240. Computer(s) 290 can execute network monitor 112. Network monitor 112 can communicate with network functions 244 and security functions 246 via network 280.

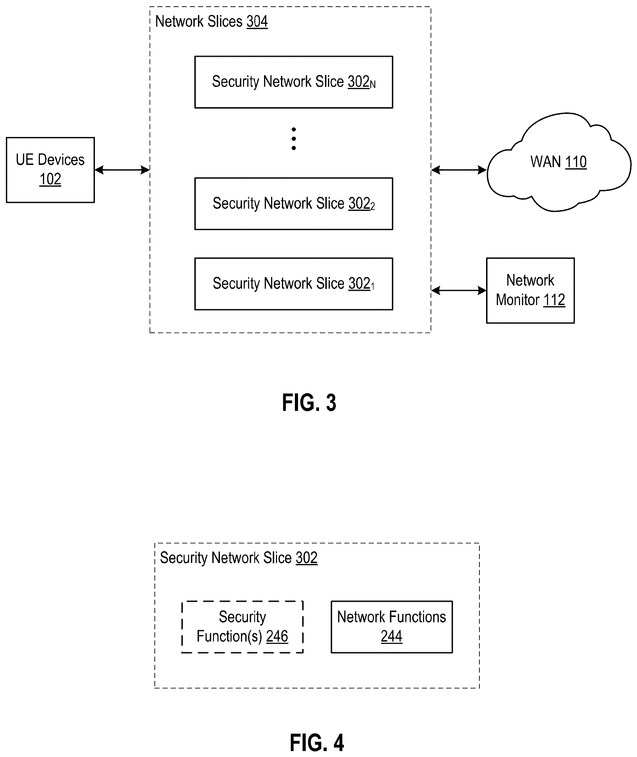

Fig. 3 is a block diagram depicting a logical view of cellular network 101 according to some embodiments. Cellular network 101 can include network slices 304. Network slices 304 can include security network slices 302₁...302_{N} (where N is an integer greater than one). Each security network slice 302 can implement some level of network security. Security network slice 302₁ can implement a base level of network security. Security network slice 302₂ can implement different network security than the base level, e.g., a higher level of network security than the base level. Security network slice 302₃ can implement different network security than security network slice 302₂, e.g., a higher level of network security than security network slice 302₂. And so on. UE systems 102 send and receive data to and from WAN 110 through security network slices 302. Network monitor 112 can receive data, e.g., telemetry data, from network slices 304. Telemetry data may be data related to operation of network slices 304, e.g., logs, metrics, events, traces, etc. Network monitor 112 can communicate with packet core 108 to control the allocation of UE systems 102 across security network slices 302. In some embodiments, by default, UE systems 102 can communicate through security network slice 302₁ (or multiple instances of security network slice 302₁). Through collection of telemetry data, network monitor 112 can identify suspicious behavior of UE systems 102. For a given UE system 102, in response to detection of suspicious behavior, network monitor 112 can assign the UE system to use another security network slice (e.g., security network slice 302₂). Thereafter, network monitor 112 can collect additional telemetry data. If suspicious behavior is determined to be benign, network monitor 112 can reassign a UE system back to security network slice 302₁. If suspicious behavior requires additional analysis, network monitor 112 can assign a UE system to yet another security network slice (e.g., one with increased security). At some point, if suspicious behavior is determined to meet a threshold, network monitor 112 can take action to mitigate the behavior (e.g., remove UE system from the cellular network or otherwise limit its access to the cellular network).

Fig. 4 is a block diagram depicting a security network slice 302 according to some embodiments. Security network slice 302 can include network functions 244. Optionally, security network slice 302 can include security functions 246. For example, security network function 302₁ can include a set of network functions 244 and can omit any specific security functions 246. A security network function 302₂ can include a set of network functions 244 and one or more additional security functions 246. A security network function 302₂ can include a set of network functions 244 and more and/or different security functions 246 than security network slice 302₂. And so on. Network functions 244 in each security network slice 302 can be instances of the same network functions discussed above that are used in a cellular network.

Some embodiments can provide dynamic UE relocation. When an application transaction triggers suspicious activity (e.g., unusual traffic volume or protocol violations), the system evaluates the need to reassign the UE system. The application can be network monitor 112. The application transaction trigger can be detection by network monitor 112 of suspicious behavior by a UE system. Metrics such as IMSI, GUTI, and QoS parameters can be analyzed to determine the device's current state and associated risks. The decision to relocate can be made by an AI/ML engine, which processes data from multiple sources, including customer IT tools and observability systems.

Some embodiments can provide AI/ML-driven threat analysis. AI/ML models can be trained on large datasets that identify patterns associated with bad actors, such as: initiation of DDoS attacks, suspicious data exfiltration, repeated failed authentication attempts, and the like. The AI/ML engine can assign a security score to the UE system, determining the appropriate level of security slicing (e.g., which security network slice 302 is to be used for the device). The AI/ML model can be implemented by network monitor 112.

Some embodiments can provide enhanced security network slicing. Security network slices 302 can be configured with varying capabilities, such as: Level 1 - Basic anomaly detection; Level 2 - Advanced tools like packet sniffers for deep packet inspection; Level 3 - Real-time threat mitigation using firewalls and policy-based controls. Such security levels are exemplary and any number and types of security levels can be implemented. Once moved, the UE system's activities are monitored, and additional data analytics can be performed.

Some embodiments can provide on-demand security activation. This elastic approach can eliminate the need for constant monitoring, instead focusing resources on high-risk scenarios. Benefits can include reduced computational overhead, improved scalability, and optimized use of network resources.

Some embodiments can provide monetization opportunities. Each completed dynamic relocation (termed a "token") can be tracked for billing and reporting purposes. Service providers can offer tiered pricing models based on: number of security slice activations; duration of enhanced security; and level of protection applied. This can create a direct revenue stream for the service provider while providing customers with a transparent, pay-as-you-go security model.

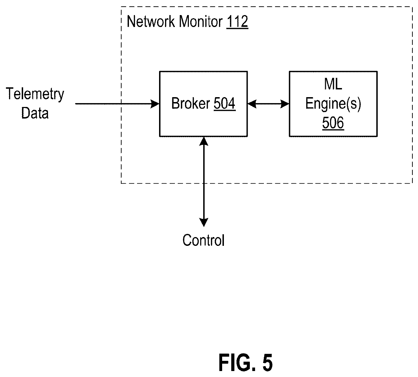

Fig. 5 is a block diagram depicting network monitor 112 according to some embodiments. Network monitor 112 can include a broker 504 and ML engines 506. Broker 504 may be a system configured to receive telemetry data and perform various functions described herein. An ML engine 506 may be a system configured to implement an ML model for processing input and generating output. Broker 504 and ML engine(s) 506 may be implemented by one or more computers.

Artificial intelligence (AI) may be a field of science concerned with building machines that can reason, learn, and act in a manner that would normally require human intelligence or that involves data having a scale exceeding what humans can analyze. Machine learning (ML) may be enabling a machine to autonomously learn and improve without being explicitly programmed. Deep learning may be a type of machine learning that uses artificial neural networks to process and analyze information. Various examples are described herein in the context of machine learning, which can include deep learning, but which are not meant to exclude any other form of AI. An ML model may be a set of algorithms for machine learning. For example, an ML model can be trained on data to produce estimates about data patterns. The data pattern estimates can be used to make predictions, make classifications, etc. for input data. In machine learning, training may be a process evaluating the data pattern estimates against known data patterns using an error function and adjusting parameters of the model to minimize the error function.

An ML engine 506 can be trained on sets of telemetry data generated by networks when processing traffic having different patterns, including anomalous patterns. The patterns can be classified into different categories, including different categories of anomalous behaviors. An ML engine 506 can receive telemetry data as input in an inference operation (forward propagation) and generate an output referred to herein as a trigger. A trigger may be data that initiates a process or reaction. A trigger generated by an ML engine 506 in response to input telemetry data can include one or more of a severity score, an identifier or identifiers of a UE system, a timestamp, and data indicative of a pattern in the traffic detected in response to processing the telemetry data. For example, a severity score can range between a high threshold and a low threshold and can indicate the severity of the anomalous behavior. Various types of UE identifiers are discussed above. A timestamp may be data indicating a time. Data indicative of a pattern in traffic may be data that describes a traffic pattern, such as a description of an anomalous traffic pattern (e.g., a DDoS traffic patterns, IP/port scanning traffic patterns, and the like known in the art).

The telemetry data can include various information, such as UE identifiers (e.g., IMSI, GUIT, etc.), packet counts, traffic rates, session durations, flow entropy, data derived from payload inspection, and the like. A packet count may be a count of packets over time. A traffic rate may be the rate of packets flowing over time. A session duration may be a duration of a PDU session initiated by a UE system. Flow entropy may be a metric that quantifies the uncertainty or disorder of a feature in traffic, such as packet size, header values, etc. Data derived from payload inspection may be any data generated by processing payload data of the packets.

Broker 504 can receive telemetry data from RAN 104, networks 106, packet core 108, or any combination thereof. For example, telemetry data can be generated by computers or network devices (e.g., network switches) during processing traffic of PDU sessions. Broker 504 can pass telemetry data as input to ML engines 506. ML engine(s) 506 can use supervised and/or unsupervised learning techniques known in the art to detect patterns in telemetry data, classify patterns, output triggers in response to the classification. Broker 504 can perform actions in response to the triggers. For example, an action can be to redirect the traffic of a given PDU session to a different network slice in response to detection of anomalous traffic pattern(s).

Broker 504 can communicate with RAN 104, networks 106, packet core108, or any combination thereof to provide control in response to the recommended actions. If corrective action is required, broker 504 can initiate a request to packet core 108 to dynamically alter network policy for the UE system generating the traffic. Such changes can include redirection to another network slice (e.g., having higher security), implementation of application-specific firewalls, quality of service (QoS) reassignments, etc.

Broker 504 can track each completed action, including the trigger, ML recommendation, enforcement steps taken, and confirmations of actions taken, in an activity log. The activity log can be used to generate tokenized data structures for downstream monetization models, such as billing, auditing, service level agreement (SLA) validation, or the like. Broker 504 can enforce strict governance through built-in controls that verify the legitimacy, consistency, and compliance of all policy change requests. This can ensure that no automatic enforcement action proceeds without validation against predefined customer governance rules and network integrity standards. This design can uniquely empower the customer to maintain full control over detection policies and enforcement triggers, while providing a secure, auditable path for making real-time updates to packet core 108 through a decoupled, brokered architecture. The separation of detection, decisioning, and enforcement can preserve architectural integrity, support legal compliance, and ensure a framework that is resilient, modular, and legally auditable.

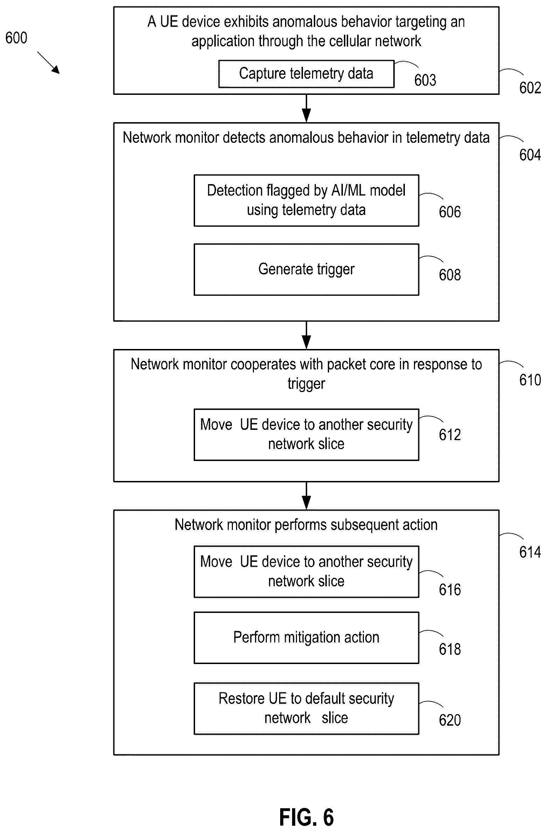

Fig. 6 is a flow diagram depicting a method 600 of managing a UE system in a cellular network according to some embodiments. Method 600 can begin at step 602, where the UE system can exhibit anomalous behavior targeting an application through the cellular network. For example, a user of a UE system can use the device to initiate a DDoS attack targeting a financial application accessed through the cellular network. Anomalous behavior can be exhibited in telemetry data by RAN 104, networks 106, and/or packet core 108, which is captured by network monitor 112 (step 603). At step 604, network monitor 112 can detect the anomalous behavior by analyzing the telemetry data. Network monitor 112 can receive, for example, telemetry data from network functions of the packet core. By analyzing the telemetry data, network monitor 112 can detect suspicious behavior. For example, at step 606, network monitor 112 can pass the telemetry data to an AI/ML model trained to detect and flag anomalous behavior. At step 608, network monitor 112 can generate a trigger in response to such detection. The trigger can include, for example, the UE system's IMEI, IMSI, current QoS parameters, current security network slice, threat score, etc.

At step 610, network monitor 112 cooperates with packet core 108 in response to the trigger. For example, at step 612, network monitor 112 can request packet core 108 to move the UE system to another security network slice (e.g., a security network slice that implements increased security). At step 614, network monitor 112 can perform subsequent action based on additional telemetry data from packet core 108 (e.g., collected from the new security network slice). For example, at step 616, network monitor 112 can cooperate with packet core 108 to move the UE system to yet another security network slice (e.g., a security network slice with still further increased security). At step 618, network monitor 112 can perform a mitigation action, such as limiting access to the cellular network for the UE system, removing the UE system from the cellular network, and the like. At step 620, network monitor 112 can restore the UE system to the default security network slice (e.g., the anomalous behavior is later determined to be benign in response to the further security analysis performed by the new security network slice). Method 600 can provide enhanced security by isolating bad actors and minimizing network disruption by such bad actors. Method 600 can provide a real-time response to ensure minimal latency in threat mitigation.

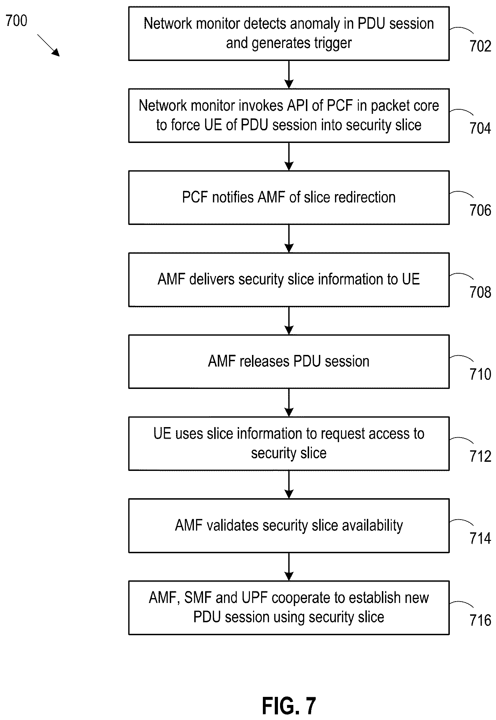

Fig. 7 is a flow diagram depicting a method 700 of switching network slices for a PDU session in response to a trigger according to some embodiments. Method 700 may be performed in step 610 and step 614 described above to take actions in response to triggers. Method 700 begins at step 702, where network monitor 112 detects an anomaly in a PDU session and generates a trigger, as described above. At step 704, network monitor 112 can invoke an API of a PCF network function in packet core 108 to force the UE system of the PDU session into a security slice. At step 706, the PCF function of packet core 108 can notify the AMF function in packet core 108 of the slice redirection. At step 708, the AMF function of packet core 108 can deliver the security slice information to the UE system (e.g., via a policy update from a first policy that uses the first network slice to a second policy that uses the second network slice). At step 710, the AMF function of packet core 108 can release the PDU session (optional). At step 712, the UE system can use the slice information to request access to the security slice. At step 714, the AMF function of packet core 108 can validate the security slice availability. At step 716, the AMF, SMF, and UPF functions of packet core 108 can cooperate to establish a new PDU session or move the existing PDU session to the security slice.

Some embodiments provide: 1) A method, apparatus, and non-transitory computer readable medium for dynamically relocating a UE system to a security network slice based on application transactional triggers. 2) A method, apparatus, and non-transitory computer readable medium that can use real-time telemetry data and an AI/ML model to evaluate UE system behaviors and identify potential security risks. 3) A method, apparatus, and non-transitory computer readable medium that can have the ability to assign UE systems to security network slices with varying levels of protection based on risk assessments. 4) A method, apparatus, and non-transitory computer readable medium that can provide a monetization model based on dynamic security network slicing. 5) A method, apparatus, and non-transitory computer readable medium that can integrate security tools, such as packet sniffers, with network functions of the cellular network for enhanced threat detection and mitigation.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

As used herein, the term "couple" and its derivatives include: (a) electrical and communicative coupling; and (b) do not imply a direct connection, but rather may include intervening elements, unless described as "directly coupled."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. An apparatus for monitoring a cellular network, comprising:
a machine learning, ML, engine configured to output a trigger in response to processing first telemetry data from the cellular network, the first telemetry data generated in response to traffic of a session, managed by the cellular network, between a device and a network; and
a broker configured to receive the first telemetry data from the cellular network, provide the first telemetry data to the ML engine, receive the trigger from the ML engine, and control a packet core of the cellular network, in response to the trigger, to move the session from a first network slice of the cellular network to a second network slice of the cellular network.

2. The apparatus of claim 1, wherein
the first telemetry data includes at least one of: an identifier of the device, a packet count of the traffic, a rate of the traffic, a duration of the session, a flow entropy metric, or data derived from inspection of packet payloads in the traffic.

3. The apparatus of claim 1 or 2, wherein
the trigger includes at least one of: a severity score, an identifier of the device, a timestamp, or data indicative of a pattern in traffic detected by the ML engine in response to processing the first telemetry data.

4. The apparatus of any one of the claims 1 to 3, wherein
the broker is configured to communicate with a first network function of the packet core to change a policy of the device from a first policy that uses the first network slice to a second policy that uses the second network slice.

5. The apparatus of any one of the claims 1 to 4, wherein
the second network slice includes packet inspection of the traffic.

6. The apparatus of any one of the claims 1 to 5, wherein
the second network slice includes policy-based controls of the traffic.

7. The apparatus of any one of the claims 1 to 6, wherein
the broker is configured to receive second telemetry data from the second network slice, provide the second telemetry data to the ML engine as input, receive another trigger from the ML engine in response to processing the second telemetry data, and communicate with the packet core, in response to the other trigger, to move the session from the second network slice to a third network slice of the cellular network.

8. A cellular network, comprising:
a radio access network, RAN, a first network, and packet core coupled to the RAN by the first network, at least one of the RAN, the first network, and the packet core configured to generate first telemetry data in response to traffic of a session between a device and a second network; and
a network monitor configured to receive the first telemetry data and control a packet core of the cellular network, in response to processing the telemetry data, to move the session from a first network slice of the cellular network to a second network slice of the cellular network;
wherein in particular
the first telemetry data includes at least one of: an identifier of the device, a packet count of the traffic, a rate of the traffic, a duration of the session, a flow entropy metric, or data derived from inspection of packet payloads in the traffic.

9. The cellular network of claim 8, comprising at least one of the following features:
(A) the network monitor is configured to generate a trigger in response to processing the first telemetry data, the trigger including at least one of: a severity score, an identifier of the device, a timestamp, or data indicative of a pattern in traffic detected by the network monitor in response to processing the first telemetry data;
(B) the network monitor is configured to communicate with a first network function of the packet core to change a policy of the device from a first policy that uses the first network slice to a second policy that uses the second network slice;
(C) the second network slice includes packet inspection of the traffic; and
(D) the second network slice includes policy-based controls of the traffic.

10. The cellular network of claim 8 or 9, wherein
the network monitor is configured to receive second telemetry data from the second network slice, process the second telemetry data, and communicate with the packet core, in response to processing the second telemetry data, to move the session from the second network slice to a third network slice of the cellular network.

11. A method of monitoring a cellular network, comprising:
receiving, at a network monitor, first telemetry data from the cellular network, the first telemetry data generated in response to traffic of a session, managed by the cellular network, between a device and a network;
processing, at the network monitor, the first telemetry data to generate a trigger; and
controlling, by the network monitor a packet core of the cellular network in response to the trigger, to move the session from a first network slice of the cellular network to a second network slice of the cellular network.

12. The method of claim 11, wherein
the first telemetry data includes at least one of:
an identifier of the device, a packet count of the traffic, a rate of the traffic, a duration of the session, a flow entropy metric, or data derived from inspection of packet payloads in the traffic; and/or wherein
the trigger includes at least one of: a severity score, an identifier of the device, a timestamp, or data indicative of a pattern in traffic detected by the ML engine in response to processing the first telemetry data.

13. The method of claim11 or 12, comprising:
communicating, by the network monitor, with a first network function of the packet core to change a policy of the device from a first policy that uses the first network slice to a second policy that uses the second network slice.

14. The method of any one of the claims 11 to 13, wherein
the second network slice includes at least one of packet inspection of the traffic or policy-based controls of the traffic.

15. The method of any one of the claims 11 to 14, further comprising:
receiving, at the network monitor, second telemetry data from the second network slice;
processing, at the network monitor, the second telemetry data to generate another trigger; and
communicating, by the network monitor with the packet core in response to the other trigger, to move the session from the second network slice to a third network slice of the cellular network.
